# EUROPEAN PATENT SPECIFICATION

(11) **EP 2 321 029 B1**
(45) Date of publication and mention of the grant of the patent: **24.02.2016**
(21) Application number: 09798609.5
(22) Date of filing: 13.07.2009
(51) Int. Cl.: B01D 39/16, B01D 35/00, B01D 46/00, B01D 46/52

(54) **MULTI-COMPONENT FILTER MEDIA WITH NANOFIBER ATTACHMENT**
MEHRKOMPONENTENFILTERMEDIEN MIT NANOFASERFIXIERUNG
MILIEU FILTRANT À PLUSIEURS COMPOSANTS AVEC UN ACCESSOIRE DE NANOFIBRES

(30) Priority: 18.07.2008 US 81883; 20.08.2008 US 90259
(43) Date of publication of application: 18.05.2011
(60) Divisional application: 16150069.9
(73) Proprietor: Clarcor INC., Franklin, Tennessee 37067 (US)
(72) Inventor: LI, Lei, West Chester Ohio 45069 (US); GREEN, Thomas, B., Liberty Township Ohio 45011 (US)
(74) Representative: Pronovem
(86) International application number: PCT/US2009/050392
(87) International publication number: WO 2010/009043

(56) References cited:
- EP-A2- 2 006 009
- WO-A1-01/09425
- KR-B1- 100 512 067
- US-A1- 2003 003 826
- US-A1- 2006 014 460
- US-A1- 2007 125 700
- US-A1- 2008 314 010

## Description

### FIELD OF THE INVENTION

This invention generally relates to filter media, and in particular to a composite filter media comprising a filter media formed of at least two different polymeric materials and fine fibers, and method of making the same .

### BACKGROUND OF THE INVENTION

Fluid streams such as liquid flows and gaseous flows (e.g. air flows) often carry particulates that are often undesirable contaminants entrained in the fluid stream. Filters are commonly employed to remove some or all of the particulates from the fluid stream.

Filter media including fine fibers formed using an electrostatic spinning process is also known. Such prior art includes Filter Material Construction and Method, U.S. Patent No. 5,672,399; Cellulosic/Polyamide Composite, U.S. Patent Publication No. 2007/0163217; Filtration Medias, Fine Fibers Under 100 Nanometers, And Methods, U.S. Provisional Patent Application No. 60/989,218; Integrated Nanofiber Filter Media, U.S. Provision Patent Application No. 61/047,459; Filter Media Having Bi-Component Nanofiber Layer, U.S. Provisional Patent No. 61,047,455. As shown in these references nanofibers are commonly laid upon a finished preformed filtration media substrate.

### BRIEF SUMMARY OF THE INVENTION

The according to claim 1 present invention is directed toward a composite filter media including a multi-component substrate media incorporating nanofibers integrated with the media according to claim 1. One of the components of the substrate media is a low melt polymeric component that acts to bind the other fiber components of the substrate media together, and also to bind the nanofibers to the substrate media.

The document WO 01/09425 A1describes a composite filter media comprising a multi-component media comprising polyethylene as component having a lower melting point, and fine fibers having a diameter which may be 0.5 micrometer, which are heat bonded to the multi-component media.

Preferably and in according to some embodiments, this is accomplished in two different steps including first forming the underlying substrate material with heat and/or pressure such that the low melt component tends to at least partially coat and bind the other fibers of the multi-component substrate together. More preferably, a substrate media comprising coextruded bi-component fibers formed of a high melt polymer and a low melt polymer is provided.. After the multi-component substrate media is formed either by the initial binding of the substrate media through melting of the low melt component or via coextrusion of bi-component fibers, the nanofibers can be integrated into the substrate media, such as by way of depositing a layer along a surface of the said substrate media. In this process, the low melt component is used not only to bind these other substrate fibers together, but also to securely adhere and affix the nanofibers into a composite filter media, which preferably cannot be removed without destruction such that it in essence forms a single common layer of overall filtration media.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a schematic cross-sectional view of a composite filter media according to an embodiment of the present invention;
FIG. 2 is a schematic cross-sectional view of a composite filter media according to another embodiment of the present invention employing multiple depositions of fine fibers and substrate media fibers;
FIG. 3 is a schematic illustration of a system performing process of making an integrated fiber composite filter media according to an embodiment of the present invention;
FIG. 4 is a schematic illustration of a system performing process of making an integrated fiber composite filter media according to another embodiment of the present invention;
FIG. 5 is a schematic illustration of a system performing process of making an integrated fiber composite filter media according to yet another embodiment of the present invention;
FIG. 6 is a scanning electron microscopic image taken at a magnification level of x600 of a composite filter media according to an embodiment of the present invention before heat and pressure treatments;
FIG. 7 is a scanning electron microscopic image taken at a magnification level of x2,000 of the composite filter media of FIG. 6;
FIG. 8 is a scanning electron microscopic image taken at a magnification level of x600 of the composite filter media of FIG. 6 after heat treatment;
FIG. 9 is a scanning electron microscopic image taken at a magnification level of x2,000 of the composite filter media of FIG. 8;
FIG. 10 is a scanning electron microscopic image taken at a magnification level of x600 of the composite filter media of FIG. 8 after pressure treatment;
FIG. 11 is a schematic illustration of a concentric sheath/core type bi-component fiber according to an embodiment of the present invention;
FIG. 12 is a schematic illustration of an eccentric sheath/core type bi-component fiber according to an embodiment of the present invention;
FIG. 13 is a schematic illustration of a side-by-side type bi-component fiber according to an embodiment of the present invention;
FIG. 14 is a schematic illustration of a pie wedge type bi-component fiber according to an embodiment of the present invention;
FIG. 15 is a schematic illustration of a hollow pie wedge type bi-component fiber according to an embodiment of the present invention;
FIG. 16 is a schematic illustration of an islands/sea type bi-component fiber according to an embodiment of the present invention;
FIG. 17 is a schematic illustration of a non-cylindrical, side-by-side, bi-component fibers according to an embodiment of the present invention;
FIG. 18 is a schematic illustration of a non-cylindrical, tipped, bi-component fibers according to an embodiment of the present invention; and
FIG. 19 is a schematic illustration of a system performing a process of making an integrated fiber composite filter media according to an embodiment of the present invention; and
FIG. 20 is a schematic illustration of a system performing a process of making an integrated fiber composite filter media according to a different embodiment of the present invention.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

The following disclosure will discuss particular embodiments of a composite filter media comprising fine fibers formed on a multi-component filter media including at least two different materials, at least one of which is a low melt component and methods of making the same.

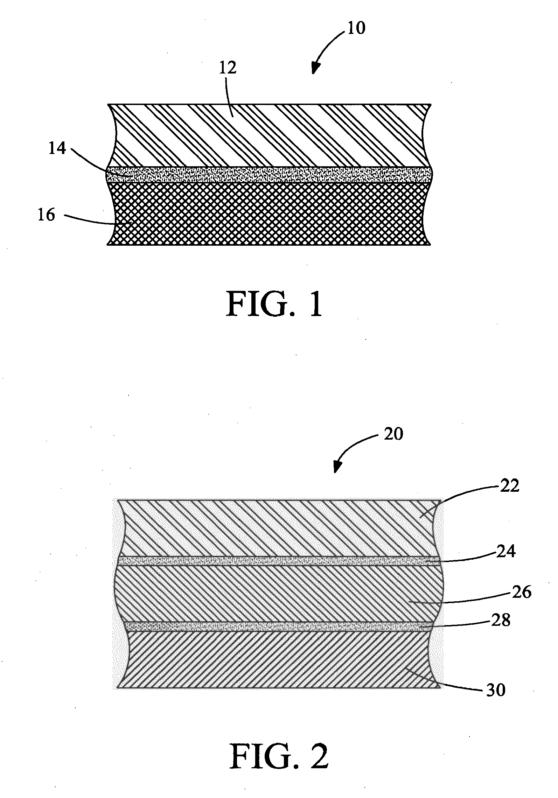

FIG. 1 is a schematic cross-sectional view of a composite filter media 10 according to an embodiment of the present invention. As shown, the composite filter media 10 comprises a first coarse layer 12, a second nanofiber layer 14, and a third coarse layer 16. In this embodiment, the second nanofiber layer 14 comprises fine fibers, such as electrospun fine fibers, sandwiched between the first coarse layer 12 and the third coarse layer 16. The first layer 12 and/or the third layer 16 may comprise a multi-component filter media including fibers formed of at least two different materials, at least one of which is a low melt component. The low melt component is a low melt polymer such as polypropylene, polyethylene, co-polyester or any suitable polymer with a low melting temperature. The other components may comprise a polymers having a higher melting point than the low melt component, or other suitable fiber materials such as glass and/or cellulose. While a sandwich configuration is shown in which nanofibers are sandwiched in coarse substrates, one of the first and third layers 12, 16 is optional such that the nanofiber layer 14 may reside on the inlet or outlet side of the media.

For example, the first layer 12 may comprise a filter media formed of coextruded bi-component fibers including a high melt polymeric component and a low melt polymeric component. The high melt polymer component and the low melt polymer component of the bi-component filter media are selected such that the high melt polymer has a higher melting temperature than the low melt polymer. Suitable high melt polymers include, but are not limited to, polyester and polyamide. Suitable low polymers include polypropylene, polyethylene, co-polyester, or any other suitable polymers having a lower melting temperature than the selected high melt polymer. In one embodiment, a bi-component fibers of the filter media may be formed of polyester and polypropylene. In other embodiment, a bi-component fibers of the filter media may be formed of two different type of polyesters, one of which, having a higher melting point than the other.

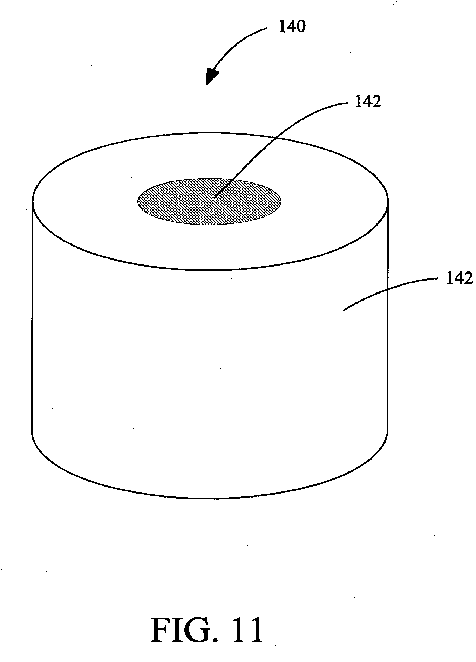

Different types of coextruded bi-component fibers may be used to form a filter media of the first layer 12 and/or the third layer 16. Some examples of the bi-component fibers are schematically illustrated in FIGS. 11-18. In FIG. 11, a schematic illustration of a concentric sheath/core type bi-component fiber 140 is shown. The concentric sheath/core type bi-component fiber 140 comprises a core 142 formed of a high melt polymer and a sheath 144 around the core formed of a low melt polymer. A filter media may be formed with these fibers, then heated to metl the sheath, which bonds the filter media together upon cooling. The concentric sheath/core can also be used to deliver an outer layer of a high value (and/or low strength) polymer around a lower cost, yet stronger core.

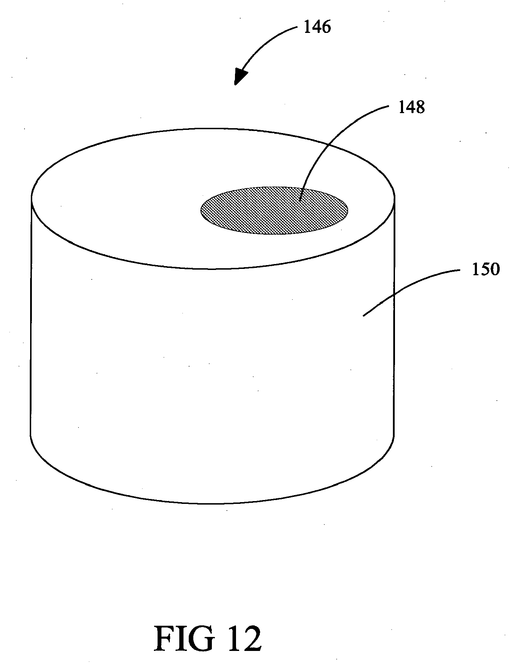

An eccentric sheath/core type bi-component fiber 146 comprising a core 148 and a sheath 150 is shown in FIG. 12. This fiber is similar to the concentric sheath core fiber 140, but with the core 148 shifted off-center. The different shrinkage rates of the two polymer components can cause the fiber to curl into a helix when heated under relaxation. This allows an otherwise flat fiber to develop crimp and bulk.

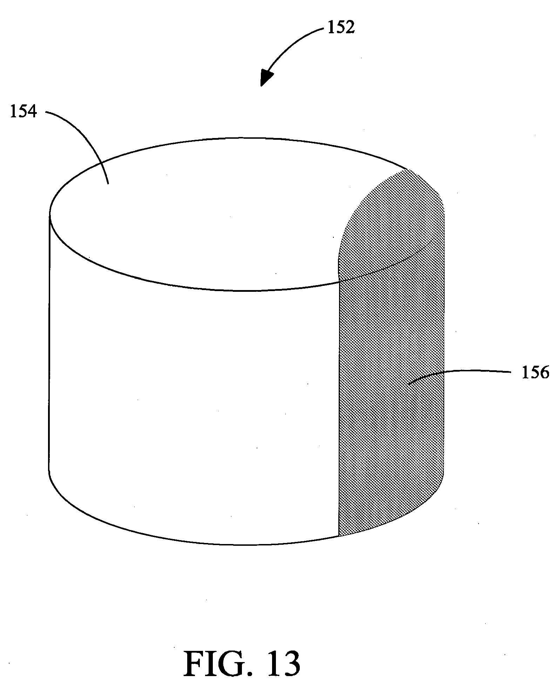

FIG. 13 schematically illustrates a side-by-side type bi-component fiber 152 including a high melt component 154 and a low melt component 156. This is a further extension of the eccentric sheath/core fiber, in which both polymers occupy a part of the fiber surface. With proper polymer selection, this fiber can develop higher levels of latent crimp than the eccentric sheath/core fiber 146.

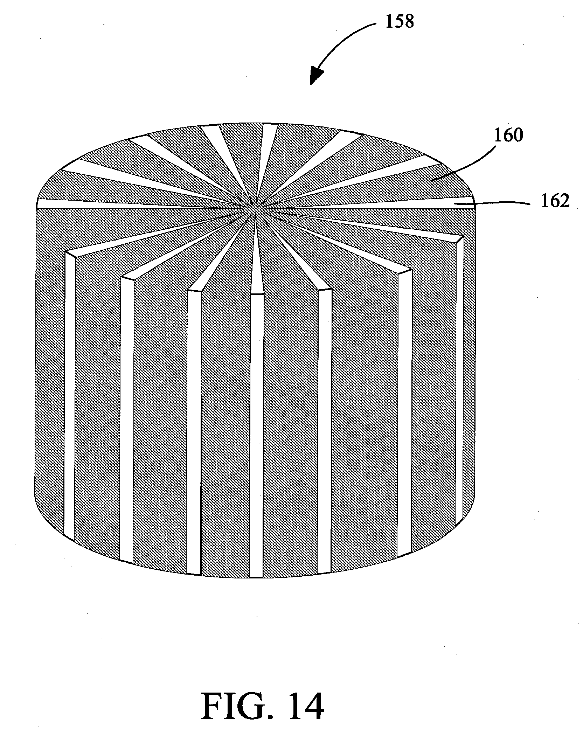

A pie wedge type bi-component fiber 158 is schematically illustrated in FIG. 14. The pie wedge fiber 158 comprises a plurality of adjacent wedges formed of a high melt polymer and a low melt polymer. Each high melt wedge 160 has a low melt wedge 162 on either side. These fibers are designed to be split into the component wedges by mechanical agitation (typically hydroentangling), yielding microfibers of 0.1 to 0.2 denier in the filter media.

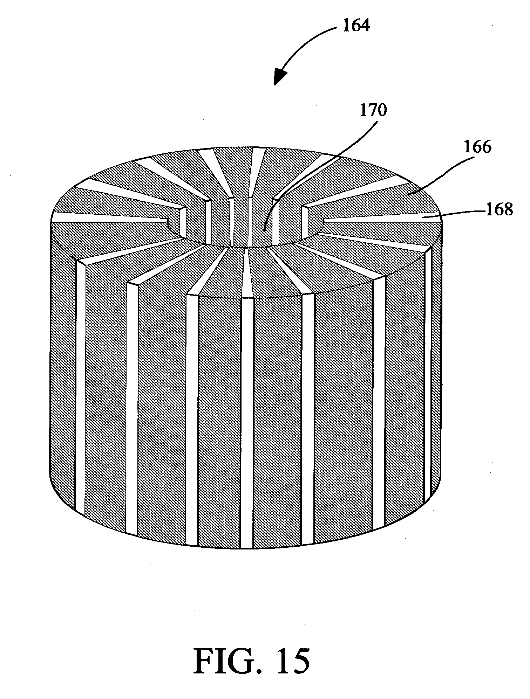

FIG. 15 is a schematic illustration of a hollow pie wedge type bi-component fiber 164 comprising high melt wedges 166 and low melt wedges 168. The hollow pie wedge fiber 164 is similar to the pie wedge fiber 158 but with a hollow center 170 core that prevents the inner tips of the wedges from joining, thus making splitting easier.

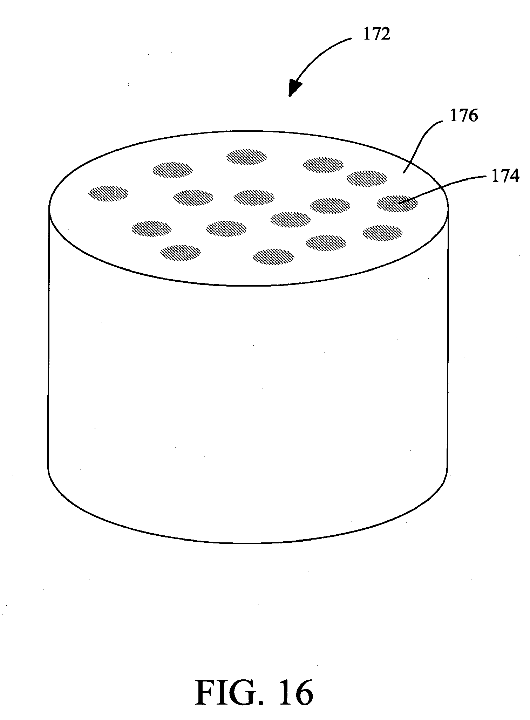

FIG. 16 is a schematic illustration of a islands/sea type bi-component fiber 172. This fiber is also known as the "pepperoni pizza" configuration where a high melt component 174 is the pepperoni and a low melt component 176 is the cheese. This fiber allows the placement of many fine strands of high melt polymer within a matrix of low melt or soluble polymer that is subsequently melted or dissolved away. This allows the production of a media made of very fine microfiber because the fibers are easier to process in the "pizza" form rather than as individual "pepperonis." Staple fibers can be made of 37 pepperonis on each pizza, producing fibers about 0.04 denier (about 2 microns diameter), or even finer.

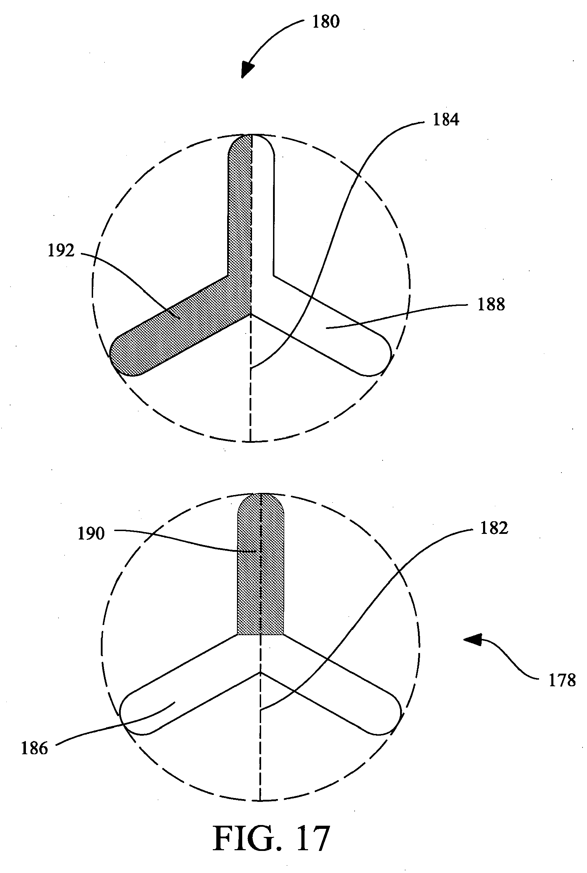

The bi-component fibers may be formed into different shapes. For example, some bi-component fibers may not have a cylindrical shape with a circular cross section as the b-component fibers described above. FIGS. 17-18 illustrates some examples of bi-component fibers with irregular shapes. Although, these fibers do not have a circular cross section, each has a diameter in context of the present invention. The diameter of the fibers having a non-circular cross section is measured from the outer perimeter of the fiber. FIG. 17 is a schematic illustration of a trilobal type bi-component fibers 178, 180. Each of the trilobal fibers 178, 180 comprises a high melt component 186, 188 and a low melt component 190, 192. Each of the trilobal fibers 178, 180 are measured by its diameter 182, 184.

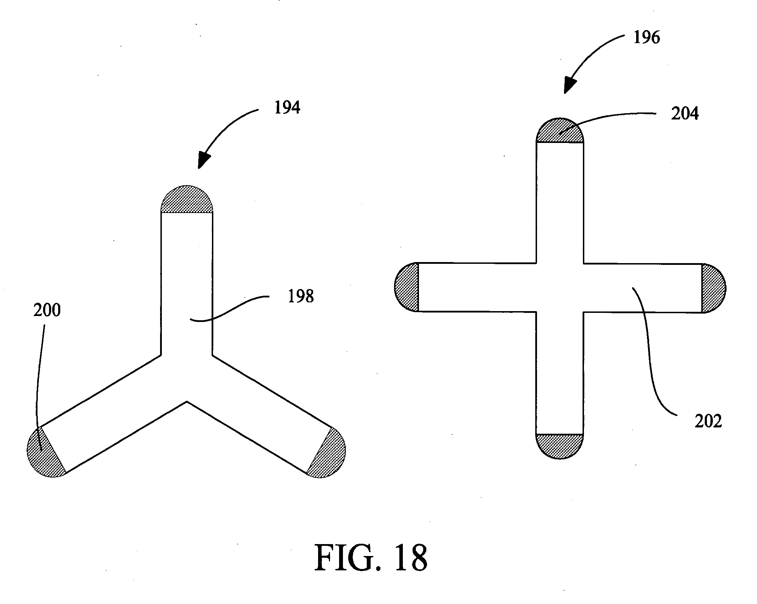

FIG. 18 is a schematic illustration of a tipped type bi-component fibers 194, 196. The fiber 194 is a tipped trilobal bi-component fiber with a high melt center 198 and low melt tips 200. The fiber 196 is a tipped cross bi-component fiber with a high melt center 202 and low melt tips 204.

The fibers of the bi-component filter media are coarser fibers than fine fibers comprising the second layer 14. The fibers of the bi-component filter media typically have an average fiber diameter greater than about 1 micron. More typically, greater than 5 micron and even more typically between about 1 micron and about 40 micron. The bi-component filter media comprising the first layer 12 has a thickness between about 0.2 and 2.0 mm, more preferably, 0.2 to 1.0 mm. Such bi-component filter media can provide a superior loading capability and a structural support necessary for the fine fibers of the second layer 14. Various thicknesses of such bi-component filter media are commercially available through HDK Industries, Inc. of Rogersville, TN sold under model name L-76520 for example, or other filter media suppliers.

The multi-component filter media may be heated to the melting temperature of the low melt component which has a lower melting temperature than other components before the fine fibers of the second layer 14 are formed on the multi-component filter media, such that the low melt component melts and may at least partially coat fibers formed of other materials having a higher melting temperature. Preferably, the multi-component fiber media is formed of coextruded bi-component fibers, as described above, which may be heated prior to the formation of the fine fiber layer 14, wherein the low melt component of the bi-component fibers melt and bonds together high melt component of the fibers. Alternatively, the multi-component filter media can be heated subsequent to the formation of the fine fiber layer 14, wherein the low melt component melts and binds the high melt components and also embeds and binds the fine fibers of to the multi-component filter media.

In a different embodiment, the bi-component filter media comprising a layer of fibers formed of a high melt polymer and a layer of fibers formed of a low melt polymer may be heated to, or above, the melting temperature of the low melt polymer, wherein the low melt fibers melt and are absorbed onto the high melt fiber layer via wicking effect, thereby at least partially coating and bonding the high melt fibers. The low melt fibers may not remain as fibers and are substantially deformed from melting and/or substantially non-existent in fiber form (e.g. less than 50% of low melt fibers remain and the material partially coats and binds polyester fibers). In this embodiment, the low melt fiber layer is substantially thinner than the high melt fiber layer, such that the low melt fiber component can melt and coat the high melt fibers without clogging surface of the high melt fiber layer.

In other embodiments, the first coarse layer 12 may be a multi-component filter media comprising fibers formed of more than two different materials, wherein at least one polymeric material has a lower melting temperature than the other materials, which can be melted to at least partially coat other fibers. The fibers which remain as fibers (i.e. not melted) may be formed of high melt polymers. Glass fibers and/or cellulose fibers may also be used in the alternative or in addition to a high melt polymer fibers.

The second layer 14 comprises fine fibers, known as "nanofibers". The fine fibers have a very fine fiber diameter and can be formed by electrospinning or other suitable processes. For example, fine fibers typically have an average fiber diameter less than 0.5 micron, and more preferably between 0.01 and 0.3 microns. Such small diameter fine fibers can pack more fibers together without significantly increasing overall solidity of the filter media layer, thus increase filter efficiency by improving ability to trap smaller particles which passed through the first layer 12.

The fine fibers of the second layer 14 are formed on the surface of the first layer 12, which is coated with a low melt component (for example, the polypropylene coated surface of the bi-component filter media in the previously discussed embodiment). Preferably, the first layer 12 comprises coextruded bi-component fibers as described above, wherein at least some the low melt component of the bi-component fibers are on the surface of the first layer 12. As the fine fibers are formed on the first layer 12, some of the fine fibers may be entangled with some of the coarse fibers on the surface of the first layer 12. The first layer 12 and the second layer 14 can then be further bonded when the composite filter media 10 is heated to the melting temperature of the low melt component of the first layer 12, wherein the low melt component melts and bonds with the fine fibers of the second layer 14.

For example, the fine fibers may be formed of polyamide-6 via electrospinning onto the polypropylene coated polyester fibers of the first layer 12. Such construction may be reheated to the melting temperature of polypropylene wherein the polypropylene coating on the surface of the first layer 12 melts and bonds with the fine fibers formed on the same surface. The nylon (polyamide-6) has a higher melt point and is not damaged with melting of polypropylene. Other materials for fine fibers may be electrospun and used including materials as later described. In this embodiment, polypropylene acts as a bonding agent, permanently attaching the first layer 12 and the second layer 14 together such that delamination is not possible without heat or nanofiber destruction. The bonding between the first layer 12 and the second layer 14 may also involve solvent bonding and/or pressure bonding.

The composite filter media 10, as shown in FIG. 1, further includes an optional third layer 16, which may comprise a multi-component filter media similar to the filter media of the first layer 12, or any conventional filter media having some filtration capabilities, or may comprise a scrim or other non-filtration layer. The third layer 16 may be bonded with the second layer 14 via solvent bonding, adhesive bonding, pressure bonding and/or thermal bonding. Preferably, thermal bonding is used and the third layer also includes a similar low melt component. As constructed, the layers 12, 14, 16 of the composite filter media 10 may not be mechanically delaminated into separated layers after they are bonded to form the composite filter media 10. The composite filter media 10 is well suited for a pleated filter media, since the fine fibers comprising the second layer 14 are protected by the first layer 12 and the third layer 16 during pleating and handling processes.

Such composite filter media 10 can have superior dust loading capability and filtration efficiency compared to conventional filter media, thus is well suited for a depth filter media with an efficiency improvement provided by nanofibers. The depth filter media is a filter media that traps particles through the thickness of the filter media. In many filter media applications, and particularly high flow rate applications, depth media is chosen. A typical depth media comprises a relatively thick entangled collection of fibrous material. A typical conventional depth media filter is a deep (measured from inlet to outlet end) and substantially constant density media. Specifically, the density of the depth media remains substantially constant throughout its thickness but for minor fluctuations in density as may be caused for example by compression and/or stretching around peripheral regions due to mounting of the media and the like. Gradient density depth media arrangements are also known in which the density of the media varies according to a designed gradient. Different regions of different media density, porosity, efficiency and/or other characteristics can be provided over the depth and volume of the depth media.

The depth media is often characterized in terms of its porosity, density and solids content percentage. For example, a 5% solidity media means that about 5% of the overall volume comprises solids (e.g. fibrous material) and the reminder is void space that is filled by air or other fluid. Another commonly used depth media characteristic is fiber diameter. Generally, smaller diameter fibers for a given % solidity will cause the filter media to become more efficient with the ability to trap smaller particles. More smaller fibers can be packed together without increasing the overall solidity % given the fact that smaller fibers take up less volume than larger fibers.

Because depth media loads with particulates substantially throughout the volume or depth, depth media arrangements can be loaded with a higher weight and volume of particulates as compare with surface loading systems over the lifespan of the filter. Usually, however, depth media arrangements suffer from efficiency drawbacks. To facilitate such high loading capacity, a low solidity of media is often chosen for use. This results in large pore sizes that have the potential to allow some particulates to pass more readily. Gradient density systems and/or adding a surface loading media layer can provide for improved efficiency characteristics. The composite filter media according to the present invention can provide superior dust loading capability and filtration efficiency, wherein the multi-component filter media layer provides a high loading capability, while the fine fiber layer improves efficiency of the composite filter media.

An alternative embodiment of the composite filter media according to the present invention is illustrated in FIG. 2. In this embodiment, a composite filter media 20 comprises a first layer 22, a second layer 24, a third layer 26, a fourth layer 28 and a fifth layer 30. This embodiment is similar to the composite filter media 10 of FIG. 1 with additional multi-component filter media layer and fine fiber layer. That is, the first and the third layers 22, 26 of the composite filter media 20 comprise a multi-component filter media similar to the first layer 12 of the composite filter media 10. The second and fourth layers 24, 28 comprise fine fibers similar to the second layer 14 of the composite filter media 10. The fifth layer 30 is similar to the third layer 16 of the composite filter media 10 which may comprise a multi-component filter media, or any conventional filter media having some filtration capabilities, or may comprise a scrim or other non-filtration layer.

The first layer 22 and the third layer 26 may comprise a same multi-component filter media or different multi-component filter medias. For example, the first layer 22 and the third layer 26 may comprise a filter media including coextruded bi-component fibers similar to the multi-component filter media of the composite filter media 10. However, the bi-component filter media of the first layer 22 can have less solid density, and thereby less filtration efficiency, than that of the third layer 26. Similarly, the second layer 24 and the fourth layer 28 may comprise electrospun fine fibers formed from a same polymeric material and same solid density, or may comprise fine fibers formed of different polymeric materials and different solid densities. For example, the second layer 24 may comprise electrospun fine fibers of PA-6 at about 0.010 g/m², while the fourth layer 28 may comprise electropsun fine fibers of PA-6 at about 0.013 g/m². Other configurations of the composite filter media may be beneficial to different filtration applications to optimize dust loading and filtration efficiency. Again, the fifth layer 30 is an optional layer, which may be a functional layer with some filtration capability or simply a protective layer to protect the fine fibers of the fourth layer during pleating or handling. In other embodiments, a composite filter media may include more than two layers of multi-component filter media and more than two layers of fine fibers configured in various orders.

Now that different embodiments of a composite filter media according to the present invention are described, methods of forming the composite filter media according the present invention will be explained.

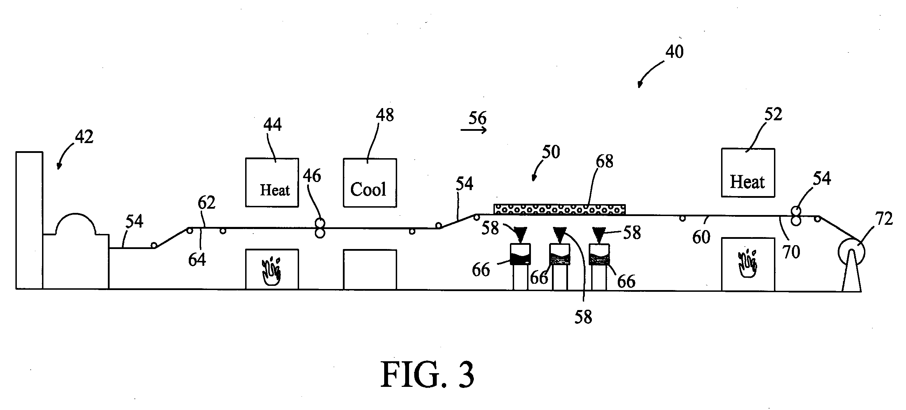

FIG. 3 schematically illustrates a representative process of making a composite filter media according to an embodiment of the present invention. The system 40 includes a multi-component filter media production device 42, an oven 44, a set of pressure rollers 46, an optional cooling station 48 (which may include air conditioned cooled air or merely production residence time at ambient), an electrospinning station 50, an oven 52 and a set of pressure rollers 54.

In system 40, a web of multi-component filter media 54 is formed in the device 42. The web of multi-component filter media 54 travels in a machine direction 56 to the oven 44. In the oven 44, the multi-component media 54 is heated, such that a low melt component of the media melts and at least partially coats, and thereby binds, high melt components. The multi-component filter media 54 then passes through the set of pressure rollers 46 and cooling station 48, before entering the electrospinning station 50. In the electrospinning station 50, fine fibers 58 are formed and deposited on the multi-component filter media 54. If no cooling has occurred, the remaining heat from the oven 44 may be used to keep the low melt component in an at least partially melted state to facilitate melt bonding and integration of nanofiber layers. Accordingly, in one embodiment, the downstream oven 52 is optional. More preferably, the multi-component filter media with fine fibers 60 travels to a second stage oven 52, wherein, the low melt component of the multi-component filter media 54 remelts and embeds, thereby bonds the fine fibers 58. The bonding between the multi-component filter media layer 54 and the fine fibers 58 is further enhanced as the composite filter media 62 passes through the pressure rollers 54. Each component of the system 40 is discussed in detail below.

In this embodiment, the multi-component filter media is formed of bi-component fibers such as the bi-component fibers of FIGS. 11-18. For example, the concentric sheath/core type bi-component fibers may be coextruded using polyester and polypropylene. In this example, the core comprises polyester and the sheath comprises polypropylene. Such bi-component fibers may then be used to form a filter media. In one embodiment, the bi-component fibers may be used as staple fibers to form a multi-component filter media via conventional dry laying or air laying process in the device 42. The staple fibers used in this process are relatively short and discontinuous but long enough to be handled by conventional equipment. Bales of bi-component fibers can be fed to the device 42 through a chute feed and separated into individual fibers in a carding device, which are then air laid into a web of coarse fibers to form the multi-component filter media 54. Since the multi-component filter media 54 of this embodiment comprises bi-component fibers including a high melt component and a low melt component, it is also referred to as a bi-component filter media. In some embodiment, the web of coarse fibers are folded and calendered to form a thicker bi-component filter media 54.

In a different embodiment, a web comprising polyester fibers and a web comprising polypropylene fibers can be formed separated and laminated together to form the bi-component filter media 54. In such embodiment, the low melt web is on an underside 64 of the bi-component filter media 54 and the high melt web is on an upperside 62, such that fine fibers may later be formed on the low melt coated side of the bi-component filter media 54. In this embodiment, the low melt web is substantially thinner than the high melt web, such that the low melt component does not clog the surface of the high melt web when heated and melted.

In another embodiment, the multi-component filter media may be formed in the device 42 via a melt blowing process. For example, molten polyester and molten polypropylene can be extruded and drawn with heated, high velocity air to form coarse fibers. The coarse fibers can be collected as a web on a moving screen to form a bi-component filter media 54.

The multi-component filter media may also be spun-bounded using at least two different polymeric materials. In a typical spun-bounding process, a molten polymeric material passes through a plurality of extrusion orifices to form a multifilamentary spinline. The multifilamentary spinline is drawn in order to increase its tenacity and passed through a quench zone wherein solidification occurs which is collected on a support such as a moving screen. The spun-bounding process is similar to the melt blowing process, but melt blown fibers are usually finer than spun-bounded fibers.

In yet another embodiment, the multi-component filter media is web-laid. In a wet laying process, high melt fibers and low melt fibers are dispersed on a conveying belt, and the fibers are spread in a uniform web while still wet. Wet-laid operations typically use ¼" to ¾" long fibers, but sometimes longer if the fiber is stiff or thick.

The multi-component filter media 54 formed in the device 42 via one of the above discussed methods, or any other suitable methods, is transferred in the machine direction 56 toward the oven 44. Wherein the multi-component filter media 54 comprises coextruded bi-component fibers including a low melt and a high melt, a web traveling speed of the system 40 and a temperature of the oven 44 are selected such that the multi-component filter media 54 reaches the melting temperature of the low melt component. As such, low melt component in the multi-component filter media melts and are absorbed onto the surface of high melt fibers via wicking effect, thereby coating high melt fibers.

In the system 40, the multi-component filter media 54 is calendered to a desired thickness as it passes through the set of pressure rollers 46. The calendered multi-component filter media is then cooled in the cooling station 48, wherein the low melt component solidifies.

In the electrospinning station 50, the fine fibers 58 are electrospun from eletrospinning cells 66 and deposited on the bi-component filter media 54. The electrospinning process of the system 40 can be substantially similar to the electrospinning process disclosed in Fine Fibers Under 100 Nanometers, And Methods, U.S. Provisional Application No. 60/989,218, assigned to the assignee of the present application. Alternatively, nozzle banks or other electrospinning equipment can be utilized to form the fine fibers. Such alternative electorspinning devices or rerouting of chain electrodes of the cells 66 can permit the fibers to be deposited in any orientation desired (e.g. upwardly is shown although fibers can also be spun downwardly, horizontally or diagonally onto a conveyor carrying coarser fibers).

The electrospinning process produces synthetic fibers of small diameter, which are also known as nanofibers. The basic process of electrostatic spinning involves the introduction or electrostatic charge to a stream of polymer melt or solution in the presence of a strong electric field, such as a high voltage gradient. Introduction of electrostatic charge to polymeric fluid in the electrospinning cells 66 results in formation of a jet of charged fluid. The charged jet accelerates and thins in the electrostatic field, attracted toward a ground collector. In such process, viscoelastic forces of polymeric fluids stabilize the jet, forming a small diameter filaments. An average diameter of fibers may be controlled by design of eletrospinning cells 66 and formulation of polymeric solutions.

The polymeric solutions used to form the fine fibers can comprise various polymeric materials and solvents. Examples of polymeric materials include polyvinyl chloride (PVC), polyolefin, polyacetal, polyester, cellulous ether, polyalkylene sulfide, polyarylene oxide, polysulfone, modified polysulfone polymers and polyvinyl alcohol, polyamide, polystyrene, polyacrylonitrile, polyvinylidene chloride, polymethyl methacrylate, polyvinylidene fluoride. Solvents for making polymeric solution for electrostatic spinning may include acetic acid, formic acid, m-cresol, tri-fluoro ethanol, hexafluoro isopropanol chlorinated solvents, alcohols, water, ethanol, isopropanol, acetone, and N-methyl pyrrolidone, and methanol. The solvent and the polymer can be matched for appropriated use based on sufficient solubility of the polymer in a given solvent. For example, formic acid may be chosen for polyamide, which is also commonly known as nylon. Reference can be had to the aforementioned patents for further details on electrospinning of fine fibers.

In the system 40, an electrostatic field is generated between electrodes in the electrospinning cells 66 and a vacuum collector conveyor 68, provided by a high voltage supply generating a high voltage differential. As shown in FIG. 3, there may be multiple electrospinning cells 66, wherein fine fibers 58 are formed. The fine fibers 58 formed at the electrodes of the electrospinning cells 66 are drawn toward the vacuum collector conveyor 68 by the force provided by the electrostatic field. The vacuum collector conveyor 68 also holds and transfers the web of the multi-component filter media 54 in the machine direction 56. As configured, the web of multi-component filter media 54 is positioned between the electrospinning cells 66 and the vacuum collector conveyor 68, such that the fine fibers 58 are deposited on the muti-component filter media 54.

In one embodiment, the multi-component filter media 54 comprises coextruded bi-component fiber including a high melt component and a low melt component, which is subsequently heated to allow the low melt component to melt and bind the high melt component together. When only one side of the multi-component filter media 54 includes a low melt component, for example, only one surface of the media is coated with the low melt component, the multi-component filter media 54 is positioned between the electrospinning cells 66 and the vacuum collector conveyor 68, such that the low melt coated surface of the multi-component filter media faces the electrospinning cells 66.

In this embodiment, the electrospinning cells 66 contains a polymeric solution comprising polyamide-6 (PA-6) and its suitable solvent consisting of 2/3 acetic acid and 1/3 formic acid. In such as solvent, formic acid acts as a dissolving agent to dissolve PA-6, and acetic acid controls conductivity and surface tension of the polymeric solution. The electrospinning cells 66 generates fine fibers formed of PA-6, which are deposited onto the surface of the multi-component filter media coated with the low melt component. As the fine fibers 58 are deposited onto the surface of the bi-component filter media, some fine fibers 58 may entangle with fibers on the surface of the bi-component filter media. When some of the fine fibers 58 entangle with some fibers on the surface of the multi-component filter media, some solvent remaining in the fine fibers from the electrospinning process can effectuate a solvent bonding between the fine fibers and the multi-component filter media 54. To effectuate the solvent bonding, the fibers of the multi-component filter media 54 need to be soluble or at least react with the solvent in the fine fibers.

The bonding between the multi-component filter media 54 and the fine fibers 58 is enhanced by a thermal bonding in the oven 52. In the oven 52, the multi-component filter media with the fine fibers is heated at least to or above the glass transition temperature of the low melt component. In some embodiments, the multi-component filter media with the fine fibers is heated to or above the melting temperature of the low melt component, for example to the melt point of polypropylene, such that the polypropylene coating on the polyester fibers of the multi-component filter media layer remelts and bonds with the fine fibers formed of PA-6. Here, PA-6 fine fibers and polyester fibers do not melt, since PA-6 and polyester have a significantly higher melting temperature than that of polypropylene. The polypropylene, which has the lowest melting temperature, melts and bonds the polyester fibers and adjacent PA-6 fine fibers together. That is, the polypropylene acts as a bonding agent between the multi-component filter media layer and the fine fiber layer, forming them into a composite filter media 70.

In system 40, the bonding between layers of the composite filter media 70 is further enhanced via a pressure bonding as the composite filter media 70 passes through the set of pressure rollers 54. The temperature of the composite filter media 70 which has been heated in the oven 52 is significantly higher than the glass transition temperature of the low melt component. Therefore, the low melt component of the composite filter media 70 is softened (may even be partially molten) when pressure is applied by the set of pressure rollers 54. Such pressure bonding while the low melt component is still soft can significantly enhance bonding between layers of the composite filter media 70, such that the layers may not be mechanically separated without tearing. After passing through the set of pressure rollers 54, the composite filter media 70 is wound onto a rewind machine 72 for subsequent processing or to used alone in a filtration application.

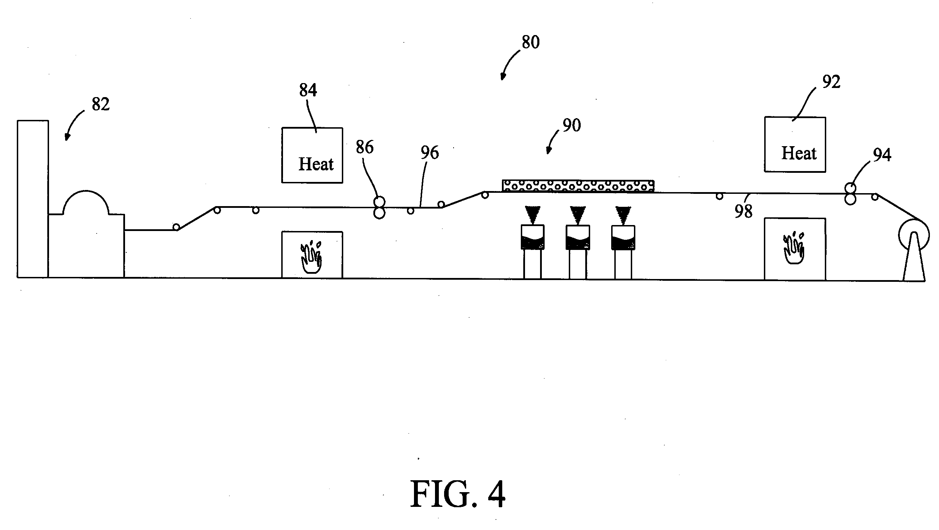

FIG. 4 schematically illustrates an alternative system 80 for making a composite filter media according to an embodiment of the present invention. As it was with the system 40, the system 80 includes a multi-component filter media production device 82, an oven 84, a set of pressure rollers 86, an electrospinning station 90, an oven 92 and a set of pressure rollers 94. However, unlike the system 40, the system 80 does not include the cooling station 48. In the system 80, the multi-component filter media 96 is not cooled before entering the electrospinning station 90. Therefore, a lower melting temperature polymeric coating on higher melting temperature fibers may not completely solidify and remain soft when entering the electrospinning station 90. As such, the lower melting temperature polymeric material, which is still soft, can bond with fine fibers as they are formed, thereby enhancing bonding between layers of a composite filter media 98.

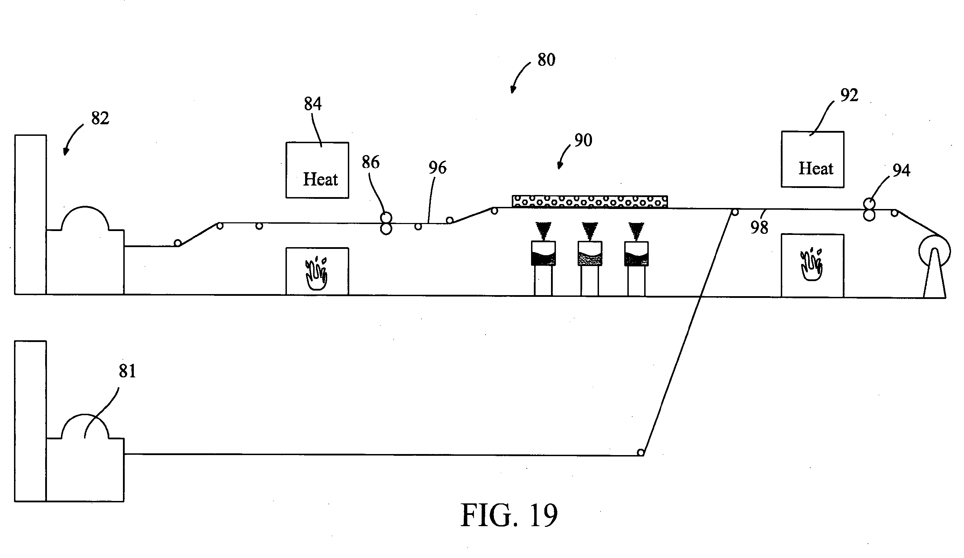

In an embodiment shown in FIG. 19, a second layer of multi-component filter media is formed in a device 81 and laminated with the multi-component filter media 96 with the fine fibers. In this embodiment the second layer of multi-component filter media is laminated on the fine fiber side of the media 96 before the laminated web enters the oven 92. In the oven 92, both low melt component of the media 96 and low melt component of the second multi-component filter media from the device 81 melt and embed the fine fibers, thereby binding layers together to form a composite filter media. Bonding between layers of the composite filter media is further enhanced by pressure in the set of pressure rollers 94.

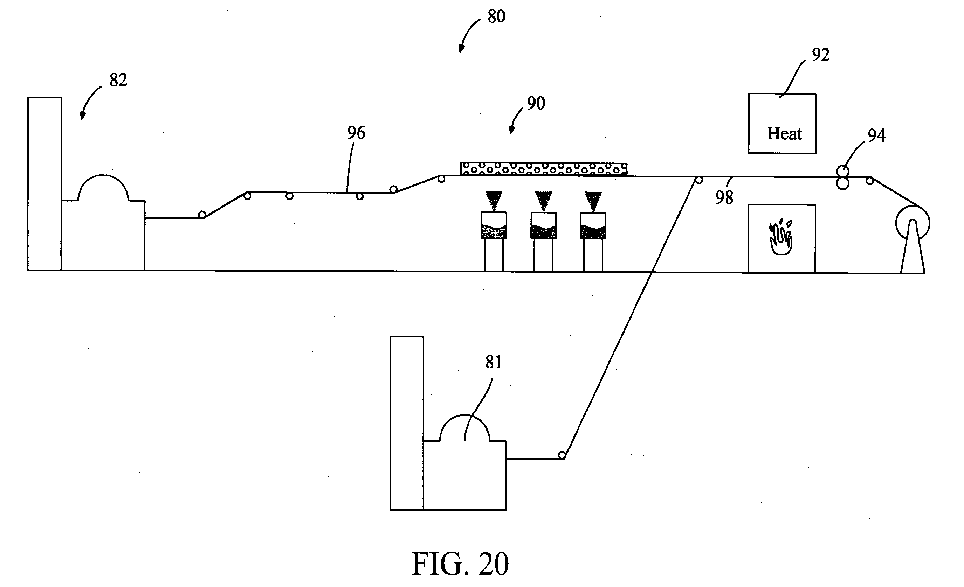

The system 80 in an embodiment shown in FIG. 20 is the same system 80 of FIG. 19, except the oven 84 is removed. As such the multi-component filter media 96 is not heated before formation of the fine fibers in the electrospinning station 90. For example, both device 81 and 82 may produce a same multi-component filter media comprising coextruded bi-component fibers. After the fine fibers are formed on the media 96, the laminated web is heated in the oven 92, wherein a low melt component of the bi-component fibers in each of the multi-component filter medias melt and binds the high melt components of the multi-component filter media together, and also binds the fine fibers to each of the multi-component filter media layers.

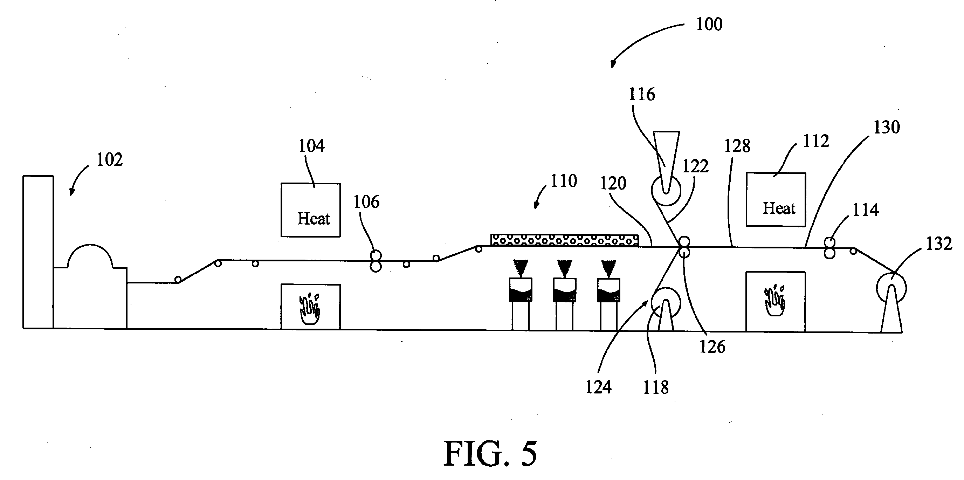

FIG. 5 schematically illustrates another system 100 for making a composite filter media according to an embodiment of the present invention. As it was with the system 80, the system 100 includes a multi-component filter media production device 102, an oven 104, a set of pressure rollers 106, an electrospinning station 110, an oven 112 and a set of pressure rollers 114. Additionally, the system 100 includes laminating stations 116, 118 between the eletrospinning station 110 and the oven 112.

In the system 100, a web of multi-component filter media with fine fibers 120 is combined with other filtration or protective layers 122, 124 and laminated as they pass through a set of pressure rollers 126. For example, the web 120 may include a multi-component filter media comprising polypropylene coated polyester fibers and PA-6 fine fibers as the previously described embodiment. The layer 122 can also be configured the same as the web 120. That is, the layer 122 may be a finished roll of the composite filter media described in FIG. 3, comprising the multi-component filter media 54 integrated with fine fibers 58 (See FIG. 3). In the system 100, the fine fiber side of the layer 122 is laminated on the multi-component filter media side of the web 120. The layer 124 may comprise a multi-component filter media without any fine fibers. When laminated, the layers resemble the composite filter media 20 of FIG. 2.

The laminated web of layers 120, 122, 124 is then heated in the oven 112. In the oven, the laminated web is heated to at least the glass transition temperature of the low melt component, such that the softened low melt component of each layer 120, 122, 124 bonds with fibers of adjacent layers when pressed together in the set of pressure rollers 114. More preferably, the laminated web is heated to or above the melting temperature of the low melt component, such that the low melt component melts and bonds with adjacent layers. For example, polypropylene in the layer 122 melts and further binds adjacent fine fibers to the polyester fibers of the layer 122. Similarly, polypropylene in the web 120 melts and bonds with each adjacent fine fiber layers. Further, polypropylene in the layer 124 melts and bonds with the fine fibers of the web 120.

This can be more clearly explained with referring to FIG. 2. The layer 122 can comprise the first and second layers 22, 24 of the composite filter media 20, and the web 120 can comprise the third and fourth layers 26, 28 of the composite filter media 20. Finally, the layer 124 can comprise the fifth layer 30 in the composite filter media 20. In this configuration, polypropylene in the first layer 22 melts and bonds with fine fibers of the second layer 24. Polypropylene in the third layer 26 melts and bonds with fine fibers of the second layer 24 and the fourth layer 28. Finally, polypropylene in the fifth layer 30 melts and bonds with fine fibers of the fourth layer 28. As polypropylene in each of the layers melts and bonds with the adjacent layer, the composite filter media 20 (or web 130 in FIG. 5) is formed. The bonding between layers of the composite filter media 130 is further enhanced with a pressure bonding in the set of pressure rollers 114. The finished composite filter media 130 is wound into a roll, which can subsequently be pleated into a pleated filter media.

### EXAMPLES AND TEST RESULTS

Test samples were prepared in a laboratory with a multi-component filter media integrated with fine fibers on one side. The multi-component filter media was supplied by HDK Industries, Inc, which was believed to be comprising bi-component fibers formed of polyester and polypropylene.

The fine fibers were formed via electrospinning process from a polymeric solution comprising PA-6 supplied by Nylstar and formic acid supplied by FisherSci. The electrospinning process parameters and set up used to form the fine fibers for the test samples are listed in Table 1.

**Table 1**

| **Parameter** | **Setting** |
|---|---|
| Electrospinning apparatus, band spinning setup | 0.05 cm (0.02 inches) band thickness |
| Polymeric solution formulation | 12% by wt. PA-6 in formic acid |
| Polymeric solution feed rate | 9.0 ml/hr |
| Voltage | 30 kV positive, 29.5 kV negative |
| Relative humidity | 51% |
| Spinning distance | 13.27 cm (5.5 inch) |
| Fine fiber density on the bi-component media | about 0.013 g/m² |

After fine fibers were formed on the bi-component media in an eletrospinning apparatus, the sample media was heated in an oven at about 330°F - 360°F for about 20 seconds and pressed between a set of metal rollers with 8.65kg (19.11bs) weight on the top roller. Scanning electron microscopic (SEM) images were taken before and after heat treatment and pressure treatment of the test samples.

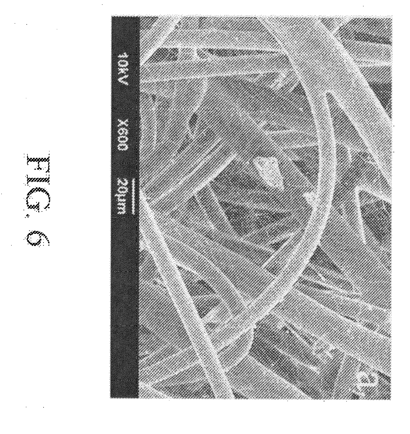

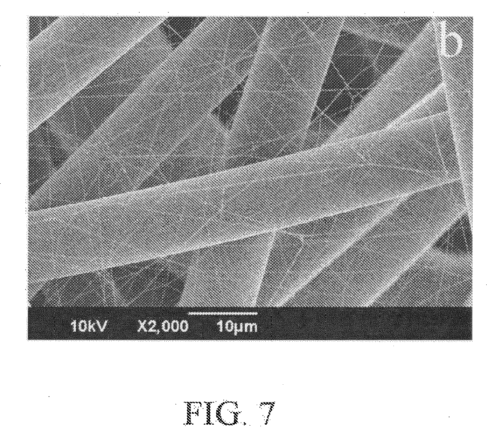

FIG. 6 is a SEM image taken at a magnification level of x600 of the test sample before heat and pressure treatments. FIG. 7 is the same sample taken a x2000 magnification. These SEM images were taken as benchmark images to be compared with SEM images of the same test sample after heat and pressure treatment to study bonding between the bi-component media and the fine fibers after each treatment.

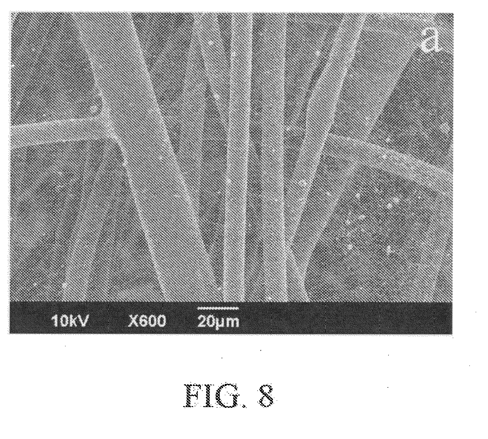

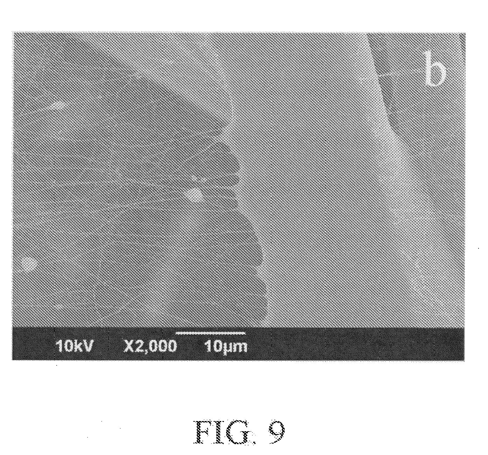

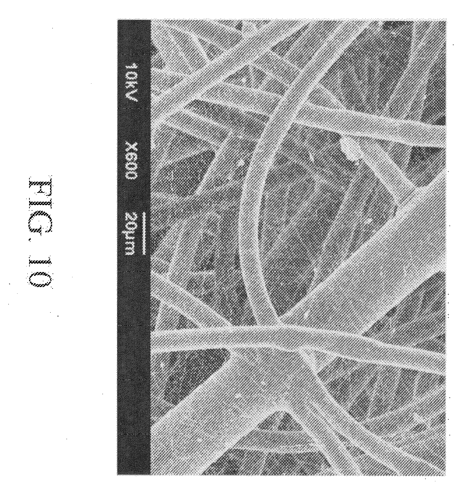

FIGS. 8-9 are SEM images of the test sample of FIGS. 6-7 after the test sample has been heated at 330°F - 360°F for 20 seconds. As shown in FIG. 9 at x2,000 magnification, the low melt component of the bi-component filter media melted and bonded to PA-6 fine fibers. FIG. 10 is a SEM image after the test sample has been heated and pressed through the set of pressure rollers for a few times. The SEM image of FIG. 10 shows that the fine fibers are and largely undamaged through the pressure treatment to enhance the bonding between the fine fibers and the bi-component filter media. The SEM images in FIGS. 6-10 exhibit some damages on the sample, which were from handling, and can be resolved in a continuous production line as described in previous embodiments.

Frazier air permeability measurements were taken with various test samples, which are listed in Table 2.

**Table 2**

| **Test Sample Description** | **Frazier Air Permeability (CFM)** |
|---|---|
| A single layer of HDK bi-component filter media #1 | 272 |
| A single layer of HDK bi-component filter media #2 | 265.5 |
| HDK bi-component filter media #1 and #2 simply stacked | 145.35 |
| HDK bi-component filter media #1 and #2 heated and laminated through pressure rollers | 62.86 |
| Two layers of HDK bi-component filter media with 0.013 g/m² fine fibers heated and laminated through pressure rollers | 52.64 |
| One layer of HDK bi-component filter media with 0.013 g/m² fine fibers and one layer of HDK bi-component filter media without fine fibers heated and laminated through pressure rollers | 56.24 |

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A composite filter media comprising:
a multi-component filter media comprising at least two different materials, at least one of the materials being a low melt component;
fine fibers carried by the multi-component filter media, the fine fibers formed of a polymeric material and having an average diameter less than about 500 nm, wherein the fine fibers are heat bonded to the multi-component filter media by the low melt component.

2. The composite filter media of claim 1, wherein the multi-component filter media comprises first fibers bonded together by the low melt component, the first fibers having a higher melt point than the low melt component, and the polymeric material of the fine fibers having a higher melt point than the low melt component.

3. The composite filter media of claim 2, wherein the first fibers comprise a high melt polymer, and wherein the first fibers are at least partially coated by the low melt component, wherein the fine fibers are partially embedded in the coating of low melt component at contact points with the first fibers, and wherein the fine fibers have an extension between contact points with the first fibers that are substantially free of the low melt component.

4. The composite filter media of claim 3, wherein the first fibers comprise one of polyester and polyamide and the low melt component comprises one of polypropylene, polyethylene, and co-polyester.

5. The composite filter media of any of claims 1-4, wherein the fine fibers are electrospun nanofibers; and wherein fibers of the multi-component media comprise an average fiber diameter of between about 1 and 40 microns.

6. The composite filter media of any of claims 1-5, wherein the fine fibers are formed of at least in part a polyamide, wherein the fine fibers are bonded with the multi-component filter media comprising polyester fibers at least partially coated with polypropylene, wherein the polypropylene acts as a bonding agent between the polyester fibers and the fine fibers.

7. The composite filter media of claim 6, wherein the multicomponent filter media has following characteristics:
(a) a Frazier air permeability between about 50 and 600 CFM;
(b) an average fiber diameter of between about 1 and 40 microns; and
(c) a base weight of between about 0.5 and about 15 oz/yd².

8. The composite filter media of claim 7, wherein the Frazier air permeability of the multi-component filter media is decreased between about 15% to about 30 % when about 0.013 g/m² of fine fibers are bonded to the multicomponent filter media.

9. The composite filter media of any of claims 1-8, wherein the multicomponent filter media has a thickness between about 0.1 and 2.0 mm, the multicomponent filter media providing dust loading capability tlu'oughout the thickness; and the fine fibers providing a higher filtration efficiency than the multicomponent filter media.

10. The composite filter media of claim 9, further including a second layer of a multi-component filter media with a thickness of between about 0.1 and 2.0 mm, the fine fibers being sandwiched between two layers of the multicomponent filter media.

11. The composite filter media of claim 10, wherein the fine fibers are melt bonded to both layers of the multi component filter media, and permanently secured thereto, such that delamination cannot occur at ambient without destruction of nanofibers, whereby the two layers in combination with the fine fibers provide a single overall integrated filtration media layer.

12. A method of forming a composite filter media, comprising steps of:
forming a multi-component filter media comprising at least two different materials, including at least one low melt polymeric material and at least one type of fibers having a higher melt point than the low melt polymeric material;
heating the multi-component filter media near the melting point of the low melt polymeric material or above said melting point;
bonding the fibers of the higher melt point together with the low melt polymeric material;
electrospinning fine fibers onto the multi-component filter media, the fine fibers having an average fiber diameter less than 500 nm; and bonding the fine fibers to the low melt polymeric material.

13. The method of claim 12, wherein the low melt polymeric material melts during the heating of the multi-component filter media and at least partially coats the fibers of the higher melt point, wherein the bonding the fine fibers to the low melt polymeric material attaches the fine fibers only at contact points; and the fine fibers have an extension between contact points free of the low melt polymeric material, wherein the forming a multi-component filter media comprises coextruding a high melt polymer and a low melt polymer to form bicomponent fibers; wherein the high melt polymer has a higher melting point than the low melt polymer.

14. The method of any of claims 12-13, wherein the bonding the fine fibers to the low melt polymeric material comprises passing the composite filter media through a set of pressure rollers to effectuate a pressure bonding between the fine fibers and multi-component filter media with the low melt polymer material acting as a bonding agent.

15. The method of any of claims 12-14, wherein the bonding the fine fibers to the low melt polymeric material further includes heating of the multicomponent filter media with the fine fibers at least to the glass transition temperature of the low melt polymeric material before passing through the set of pressure rollers, such that the low melt polymeric material is at least softened, or even somewhat melted, which acts as a bonding agent to bind the multicomponent filter media and the fine fibers into one integrated layer of composite filter media.

## Patentansprüche

1. Verbundstoff-Filtermedium, umfassend:
ein Mehrkomponenten-Filtermedium, das wenigstens zwei verschiedene Materialien umfasst, wobei wenigstens eines der Materialien eine tiefschmelzende Komponente ist;
feine Fasern, die von dem Mehrkomponenten-Filtermedium getragen werden, wobei die feinen Fasern aus einem Polymermaterial bestehen und einen mittleren Durchmesser von weniger als etwa 500 nm aufweisen, wobei die feinen Fasern durch die tiefschmelzende Komponente an das Mehrkomponenten-Filtermedium hitzegebunden sind.

2. Verbundstoff-Filtermedium gemäß Anspruch 1, wobei das Mehrkomponenten-Filtermedium erste Fasern umfasst, die durch die tiefschmelzende Komponente zusammengebunden sind, wobei die ersten Fasern einen höheren Schmelzpunkt als die tiefschmelzende Komponente aufweisen und das Polymermaterial der feinen Fasern einen höheren Schmelzpunkt als die tiefschmelzende Komponente aufweist.

3. Verbundstoff-Filtermedium gemäß Anspruch 2, wobei die ersten Fasern ein hochschmelzendes Polymer umfassen und wobei die ersten Fasern wenigstens teilweise mit der tiefschmelzenden Komponente überzogen sind, wobei die feinen Fasern an Kontaktpunkten mit den ersten Fasern teilweise in den Überzug aus tiefschmelzender Komponente eingebettet sind und wobei die feinen Fasern eine Ausdehnung zwischen Kontaktpunkten mit den ersten Fasern aufweisen, die im Wesentlichen frei von der tiefschmelzenden Komponente sind.

4. Verbundstoff-Filtermedium gemäß Anspruch 3, wobei die ersten Fasern eines von Polyester und Polyamid umfassen und die tiefschmelzende Komponente eines von Polypropylen, Polyethylen und Copolyester umfasst.

5. Verbundstoff-Filtermedium gemäß einem der Ansprüche 1-4, wobei die feinen Fasern elektrogesponnene Nanofasern sind; und wobei Fasern des Mehrkomponentenmediums einen mittleren Faserdurchmesser zwischen etwa 1 und 40 Mikrometer aufweisen.

6. Verbundstoff-Filtermedium gemäß einem der Ansprüche 1-5, wobei die feinen Fasern wenigstens zum Teil aus einem Polyamid bestehen, wobei die feinen Fasern mit dem Mehrkomponenten-Filtermedium, das Polyesterfasern umfasst, die wenigstens teilweise mit Polypropylen überzogen sind, verbunden sind, wobei das Polypropylen als Bindemittel zwischen den Polyesterfasern und den feinen Fasern wirkt.

7. Verbundstoff-Filtermedium gemäß Anspruch 6, wobei das Mehrkomponenten-Filtermedium folgende Eigenschaften aufweist:
(a) eine Frazier-Luftdurchlässigkeit zwischen etwa 50 und 600 CFM;
(b) einen mittleren Faserdurchmesser zwischen etwa 1 und 40 Mikrometer; und
(c) ein Grundgewicht zwischen etwa 0,5 und etwa 15 oz/yd².

8. Verbundstoff-Filtermedium gemäß Anspruch 7, wobei die Frazier-Luftdurchlässigkeit des Mehrkomponenten-Filtermediums um zwischen etwa 15 % und etwa 30 % verringert ist, wenn etwa 0,013 g/m² an feinen Fasern an das Mehrkomponenten-Filtermedium gebunden sind.

9. Verbundstoff-Filtermedium gemäß einem der Ansprüche 1-8, wobei das Mehrkomponenten-Filtermedium eine Dicke zwischen etwa 0,1 und 2,0 mm aufweist, das Mehrkomponenten-Filtermedium Staubbeladungskapazität über die gesamte Dicke bereitstellt und die feinen Fasern eine höhere Filtrationsleistung als das Mehrkomponenten-Filtermedium bereitstellen.

10. Verbundstoff-Filtermedium gemäß Anspruch 9, ferner umfassend eine zweite Schicht aus einem Mehrkomponenten-Filtermedium mit einer Dicke zwischen etwa 0,1 und 2,0 mm, wobei die feinen Fasern zwischen zwei Schichten des Mehrkomponenten-Filtermediums angeordnet sind.

11. Verbundstoff-Filtermedium gemäß Anspruch 10, wobei die feinen Fasern an beide Schichten des Mehrkomponenten-Filtermediums schmelzgebunden und dauerhaft daran fixiert sind, so dass bei Umgebungsbedingungen keine Delamination ohne Zerstörung der Nanofasern erfolgen kann, wodurch die beiden Schichten in Kombination mit den feinen Fasern eine einzige gesamtintegrierte Filtrationsmediumschicht bereitstellen.

12. Verfahren zum Herstellen eines Verbundstoff-Filtermediums, umfassend die Schritte:
Herstellen eines Mehrkomponenten-Filtermediums, das wenigstens zwei verschiedene Materialien umfasst, einschließlich wenigstens eines tiefschmelzenden Polymermaterials und wenigstens eines Typs von Fasern mit einem höheren Schmelzpunkt als das tiefschmelzende Polymermaterial;
Erhitzen des Mehrkomponenten-Filtermediums auf nahe dem Schmelzpunkt des tiefschmelzenden Polymermaterials oder über den Schmelzpunkt;
Zusammenbinden der Fasern mit höherem Schmelzpunkt mit dem tiefschmelzenden Polymermaterial;
Elektrospinnen von feinen Fasern auf das Mehrkomponenten-Filtermedium, wobei die feinen Fasern einen mittleren Faserdurchmesser von weniger als 500 nm aufweisen; und Binden der feinen Fasern an das tiefschmelzende Polymermaterial.

13. Verfahren gemäß Anspruch 12, wobei das tiefschmelzende Polymermaterial während des Erhitzens des Mehrkomponenten-Filtermediums schmilzt und die Fasern mit dem höheren Schmelzpunkt wenigstens teilweise überzieht, wobei das Binden der feinen Fasern an das tiefschmelzende Polymermaterial die feinen Fasern nur an Kontaktpunkten befestigt; und die feinen Fasern eine Ausdehnung zwischen Kontaktpunkten aufweisen, die frei von dem tiefschmelzenden Polymermaterial ist, wobei das Herstellen eines Mehrkomponenten-Filtermediums das Koextrudieren eines hochschmelzenden Polymers und eines tiefschmelzenden Polymers umfasst, um Zweikomponentenfasern zu bilden; wobei das hochschmelzende Polymer einen höheren Schmelzpunkt als das tiefschmelzende Polymer aufweist.

14. Verfahren gemäß einem der Ansprüche 12-13, wobei das Binden der feinen Fasern an das tiefschmelzende Polymermaterial das Führen des Verbundstoff-Filtermediums durch einen Satz von Andruckwalzen umfasst, um Druckbinden zwischen den feinen Fasern und dem Mehrkomponenten-Filtermedium zu bewirken, wobei das tiefschmelzende Polymermaterial als Bindemittel wirkt.

15. Verfahren gemäß einem der Ansprüche 12-14, wobei das Binden der feinen Fasern an das tiefschmelzende Polymermaterial ferner das Erhitzen des Mehrkomponenten-Filtermediums mit den feinen Fasern auf wenigstens die Glasübergangstemperatur des tiefschmelzenden Polymermaterials vor dem Führen durch den Satz von Andruckwalzen umfasst, so dass das tiefschmelzende Material, das als Bindemittel wirkt, wenigstens erweicht oder sogar etwas geschmolzen wird, um das Mehrkomponenten-Filtermedium und die feinen Fasern zu einer integrierten Schicht von Verbundstoff-Filtermedium zu binden.

## Revendications

1. Milieu filtrant composite comprenant :
un milieu filtrant à plusieurs composants comprenant au moins deux matériaux différents, au moins l'un des matériaux étant un composant à bas point de fusion ;
de fines fibres supportées par le milieu filtrant à plusieurs composants, les fines fibres étant constituées d'un matériau polymère et ayant un diamètre moyen inférieur à environ 500 nm,
dans lequel les fines fibres sont thermiquement liées au milieu filtrant à plusieurs composants par le composant à bas point de fusion.

2. Milieu filtrant composite selon la revendication 1, dans lequel le milieu filtrant à plusieurs composants comprend des premières fibres liées ensemble par le composant à bas point de fusion, les premières fibres ayant un point de fusion plus élevé que le composant à bas point de fusion et le matériau polymère des fines fibres ayant un point de fusion plus élevé que le composant à bas point de fusion.

3. Milieu filtrant composite selon la revendication 2, dans lequel les premières fibres comprennent un polymère à point de fusion élevé et dans lequel les premières fibres sont au moins partiellement enrobées par le composant à bas point de fusion, dans lequel les fines fibres sont partiellement noyées dans l'enrobage de composant à bas point de fusion au niveau de points de contact avec les premières fibres et dans lequel les fines fibres ont une étendue entre les points de contact avec les premières fibres qui sont pratiquement exemptes du composant à bas point de fusion.

4. Milieu filtrant composite selon la revendication 3, dans lequel les premières fibres comprennent l'un d'un polyester et d'un polyamide et le composant à bas point de fusion comprend l'un d'un polypropylène, d'un polyéthylène et d'un copolyester.

5. Milieu filtrant composite selon l'une quelconque des revendications 1 à 4, dans lequel les fines fibres sont des nanofibres électrofilées ; et dans lequel les fibres du milieu à plusieurs composants comprennent un diamètre moyen de fibre compris entre environ 1 et 40 micromètres.

6. Milieu filtrant composite selon l'une quelconque des revendications 1 à 5, dans lequel les fines fibres sont constituées au moins en partie d'un polyamide, dans lequel les fines fibres sont liées avec le milieu filtrant à plusieurs composants comprenant des fibres de polyester au moins partiellement enrobées de polypropylène, dans lequel le polypropylène sert de liant entre les fibres de polyester et les fines fibres.

7. Milieu filtrant composite selon la revendication 6, dans lequel le milieu filtrant à plusieurs composants a les caractéristiques suivantes :
(a) une perméabilité à l'air Frazier comprise entre environ 50 et 600 pi³/min ;
(b) un diamètre moyen des fibres compris entre environ 1 et 40 micromètres ; et
(c) une masse surfacique comprise entre environ 0,5 et environ 15 oz/yd².

8. Milieu filtrant composite selon la revendication 7, dans lequel la perméabilité à l'air Frazier du milieu filtrant à plusieurs composants est diminuée d' environ 15 % à environ 30 % lorsqu'environ 0,013 g/m² de fines fibres sont liées au milieu filtrant à plusieurs composants.

9. Milieu filtrant composite selon l'une quelconque des revendications 1 à 8, dans lequel le milieu filtrant à plusieurs composants a une épaisseur comprise entre environ 0,1 et 2,0 mm, le milieu filtrant à plusieurs composants fournissant une capacité de charge de poussières dans toute l'épaisseur ; et les fines fibres fournissant une efficacité de filtration plus élevée que le milieu filtrant à plusieurs composants.

10. Milieu filtrant composite selon la revendication 9, comprenant en outre une seconde couche d'un milieu filtrant à plusieurs composants ayant une épaisseur comprise entre environ 0,1 et 2,0 mm, les fines fibres étant prises en sandwich entre deux couches du milieu filtrant à plusieurs composants.

11. Milieu filtrant composite selon la revendication 10, dans lequel les fines fibres sont liées à l'état fondu aux deux couches du milieu filtrant à plusieurs composants, et bien fixées de façon permanente à celles-ci, de façon telle qu'une délamination ne peut pas avoir lieu dans les conditions ambiantes sans destruction de nanofibres, moyennant quoi les deux couches en association avec les fines fibres fournissent une couche de milieu de filtration intégrée globale unique.

12. Procédé de formation d'un milieu filtrant composite, comprenant les étapes consistant à :
former un milieu filtrant à plusieurs composants comprenant au moins deux matériaux différents, comprenant au moins un matériau polymère à bas point de fusion et au moins un type de fibres ayant un point de fusion plus élevé que le matériau polymère à bas point de fusion ;
chauffer le milieu filtrant à plusieurs composants près du point de fusion du matériau polymère à bas point de fusion ou au-dessus dudit point de fusion ;
lier les fibres ayant le point de fusion plus élevé conjointement avec le matériau polymère à bas point de fusion ;
électrofiler des fines fibres sur le milieu filtrant à plusieurs composants, les fines fibres ayant un diamètre moyen de fibre inférieur à 500 nm ; et lier les fines fibres au matériau polymère à bas point de fusion.

13. Procédé selon la revendication 12, dans lequel le matériau polymère à bas point de fusion fond pendant le chauffage du milieu filtrant à plusieurs composants et enrobe au moins partiellement les fibres ayant le point de fusion plus élevé, dans lequel la liaison des fines fibres au matériau polymère à bas point de fusion fixe les fines fibres uniquement au niveau de points de contact ; et les fines fibres ont une étendue entre les points de contact exempte du matériau polymère à bas point de fusion, dans lequel la formation d'un milieu filtrant à plusieurs composants comprend la coextrusion d'un polymère à point de fusion élevé et d'un polymère à bas point de fusion pour former des fibres à deux composants ; dans lequel le polymère à point de fusion élevé a un point de fusion plus élevé que le polymère à bas point de fusion.

14. Procédé selon l'une quelconque des revendications 12 à 13, dans lequel la liaison des fines fibres au matériau polymère à bas point de fusion comprend le passage du milieu filtrant composite dans un ensemble de rouleaux de pression pour effectuer une liaison sous pression entre les fines fibres et le milieu filtrant à plusieurs composants, le matériau polymère à bas point de fusion servant de liant.

15. Procédé selon l'une quelconque des revendications 12 à 14, dans lequel la liaison des fines fibres au matériau polymère à bas point de fusion comprend en outre le chauffage du milieu filtrant à plusieurs composants avec les fines fibres au moins à la température de transition vitreuse du matériau polymère à bas point de fusion avant le passage dans l'ensemble de rouleaux de pression, de façon telle que le matériau polymère à bas point de fusion est au moins ramolli, ou même quelque peu fondu, lequel sert de liant pour attacher le milieu filtrant à plusieurs composants et les fines fibres en une couche intégrée de milieu filtrant composite.
